(19) Europäisches Patentamt
European Patent Office
Office européen des brevets

(11) **EP 3 421 817 B1**

(12) **EUROPEAN PATENT SPECIFICATION**

(45) Date of publication and mention
of the grant of the patent:
**19.04.2023  Bulletin 2023/16**

(21) Application number: **17755861.6**

(22) Date of filing: **22.02.2017**

(51) International Patent Classification (IPC):
**F04F 13/00** (2009.01)    **F04B 9/137** (2006.01)
**F04B 9/117** (2006.01)

(52) Cooperative Patent Classification (CPC):
**F04B 9/137; F04B 9/117; F04F 13/00**

(86) International application number:
**PCT/ES2017/000016**

(87) International publication number:
**WO 2017/144748 (31.08.2017 Gazette 2017/35)**

(54) **HIGH-PRESSURE HYDRAULIC PUMPING SYSTEM WITH NO EXTERNAL POWER SUPPLY REQUIRED TO OPERATE SAME**

HYDRAULISCHES HOCHDRUCKPUMPENSYSTEM OHNE ERFORDERLICHE EXTERNE STROMVERSORGUNG ZUM BETRIEB DAVON

SYSTÈME DE POMPAGE HYDRAULIQUE HAUTE PRESSION SANS CONSOMMATION D'ÉNERGIE EXTERNE ET PROCÉDÉ POUR LA MISE EN OEUVRE DE CE SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2016  ES 201600151**

(43) Date of publication of application:
**02.01.2019  Bulletin 2019/01**

(73) Proprietor: **Universidad A Distancia De Madrid Udima, S.A.**
**28010 Madrid (ES)**

(72) Inventors:
• **DIAZ MARTIN, Ricardo**
**28010 Madrid (ES)**

• **GAYA CONZALEZ, Lorenzo**
**28010 Madrid (ES)**
• **MAYO DEL RIO, Carlos**
**28010 Madrid (ES)**

(74) Representative: **Gonzalez Palmero, Fé**
**Calle Sagasta, 4**
**28004 Madrid (ES)**

(56) References cited:
**EP-A1- 2 065 597      EP-A1- 2 913 525**
**WO-A1-2006/027562   GB-A- 1 115 569**
**GB-A- 2 346 178      US-A- 4 304 527**
**US-A- 5 634 779      US-A1- 2008 000 632**

## Description

### Object of the invention

The object of the present invention is a high-pressure hydraulic pump system for water or other incompressible fluids, that does not have any external energy requirements since, in the technical aspect thereof, the multi-phase maintenance thereof only requires a source of potential energy available at an upper level of the fluid to be pumped, such as a water reservoir or an elevated tank built on a river current.

However, the system is designed to operate as a closed circuit, which is where it is of particular use, feeding annexed hydraulic systems that either require or improve the performance thereof when operating at high pressure or load fluid flow, such as hydroelectric mini-power plants, membrane modules in ultrafiltration equipment, inverse osmosis, etc., following a cyclical process in which the water collected in the reservoir at the lower level is sent back to the upper reservoir by means of a pump powered by renewable energy sources. The goal is to pump the incompressible fluid with the highest possible energy efficiency.

The system is based on a positive displacement hydraulic machine formed by at least two parallel columns of vertical load supplied by the upper reservoir or tank, wherein the respective ends thereof comprise two coaxial cylinders with pistons, two upper actuator cylinders that are connected at the base thereof by means of a transversal pipe and that are provided with drain pipes in the headpieces thereof, with loading and unloading valves, and two suction-impulsion work cylinders for pumping the liquid from the lower reservoir through pipes with non-return valves, with the actuator and work cylinders connected by means of the shared rod of the corresponding pistons.

Since the dimensions of the actuator and the work cylinders are such that the corresponding pistons thereof exert the same force on both cylinders, following a constant relation of pressure-sections starting from an initial stage when the actuator cylinders are filled with the load fluid and one of the work cylinders is filled with the liquid fluid to be pumped, the synchronised action of the load and discharge valves results in a cyclical process in which, while a work cylinder is carrying out the process of impulsion, the other is carrying out the process of suction, resulting in the liquid being pressured pumped.

### Technical field of the invention

The technical field of the invention is that of the facilities or systems for pumping liquids that use positive displacement machines or pumps, which are characterised in that they have piston cylinders that, by means of strokes, transform the energy of the working fluid into mechanical energy.

### Background of the invention

There have long been known systems and facilities for pumping water and other liquids in closed circuits with the aim of storing potential hydraulic energy, using different energy sources to achieve this.

Among these systems, the most commonly used are the so called reversible hydraulic mini-power plants, which are power plants that serve two purposes, generating energy when the water from an upper reservoir passes through a turbine as it falls in free fall to a lower tank, and absorbing part or all of the equivalent of said energy as it pumps the water back up to the upper reservoir. These reversible mini-power plants attempt to eliminate the limitation of conventional or hydro mini-power plants, which always require a river current in order to operate, since alternating between the pump and turbine modes of operation allows them to power themselves indefinitely.

In order to make them financially viable, reversible hydroelectric mini-power plants have been designed in some cases so that they make use of renewable energy sources in order to pump water to the upper level. Therefore, the Spanish patent with the application number ES2189629-B1, applied for in 2001 for a "Procedure for using solar and wind energy by transforming it into hydroelectric energy by means of the device "Energy closed circuit" designed for this purpose", describes a process for taking water from a lower tank to an upper tank, with the aim of storing potential energy, by means of pumping stations powered by solar and wind energy in one or several stages, depending on the height the system needs to reach. Other power plants have been developed in such a way that they are able to store energy: during low demand (off-peak) or low cost of energy, water is pumped to the upper reservoir, replenishing this stored energy during high demand (peak hours) or when the cost is high, which is achieved by alternating the use of electric machines and hydraulic machines; in the pumping phase, the electric machine operates as an engine and the hydraulic machine as a pump; in the production phase, the hydraulic machine operates as a turbine and the electric machine as a generator. An example of this type of installations includes the Spanish patent with application number ES2201883-A1, also applied for in 2001, for a "Water recharging reversible power plant", which describes a procedure for improving financial efficiency in which the water discharged from the upper tank to the lower tank is passed through a turbine when the price of energy is high, and the water is pumped in the opposite direction when the price of energy is low. The power plant is described as a recharging plant since the water that evaporates from the tanks is recovered by taking it from natural external sources.

However, it is evident that none of these systems of reversible hydroelectric mini-power plants are energy efficient; since although they operate in a closed circuit in stages in which the water collected at a lower level is sent back to the upper level with the aim of keeping a storage of potential hydraulic energy, the energy produced by the turbines during the discharges is practically consumed by the process of pumping during the recharging stage, and although sources of renewable energy are used or the operation of the impulsion pumps is dependent on the fluctuation of the demand or the price of the fuel or the electricity they consume, the energy requirement is real.

In order for these small hydroelectric power plants, of a power below 5,000 KW, to be energy efficient, the inventors of the present patent application developed in 2009 a prototype of a reversible hydroelectric mini-power plant that made it possible to autonomously send back to the upper level at least 50% of the water sent through the turbine in each cycle, using for the return journey of the remaining water an impulsion pump powered by a renewable energy source, such as photovoltaic and/or wind power, due to the relatively small volume that needed to be pumped, also making the facility environmentally-friendly.

This prototype of "high energy performance and zero environmental impact reversible hydroelectric mini-power plant", which obtained the patent with the publication numbers ES2334750-B1 and ES2334750-B8, is based on a mechanical system that operates as a "flywheel", comprised of a network of pipes with control valves that connect the water reservoir used for moving the turbine with two lower tanks of the cylinder-piston type, one fixed with a plunger and another that moves along displacement rails, joined at the base thereof to the plunger of the former by means of a rocker arm with an uneven lever, that operates in cycles through strokes or admission-impulsion periods as the tanks are filled and emptied with water in synchrony.

The system was a worldwide innovation, judging by the state of the art associated with the corresponding patent, and also comprising an inventive step in one of the variations of the design of the mini-power plant in relation to the closest publications of the state of the art in the same field: the international application PCT with the publication number WO2006052107-A2 and US patent US6051892-A.

In any case, this prototype of a reversible hydroelectric mini-power plant, which is perfectly scalable at an industrial level, albeit energy efficient in comparison with its predecessors, still requires an external power source in order to operate; an energy source that feeds the impulsion pump needed to send back to the upper reservoir the volume of water that cannot be sent back by the mechanism of the system, and it is also a facility that does not produce high pressure water discharges, which greatly limits the practical applications thereof.

In addition, a reversible hydroelectric mini-power plant is not a hydraulic pump system in and of itself, that can discharge an incompressible fluid of a reservoir or tank, but it is instead a cyclical pump-turbine system that requires an upper and a lower reservoir, with a stage of discharging and passing through the turbine in order to generate energy, and another of pumping with more or less energy consumption in order to recharge the upper reservoir. As a result, a facility of these characteristics is not the solution to problems such as, for example, the flooding of a basin such as an open pit mine, in which the drainage of water at a low energy cost is required, that is, draining the water to the exterior, and from thereon, using the drainage flow as much as possible in order to generate electricity.

The US patent n° 5634779A discloses a hydraulic fluid-driven, multicylinder, modular, reciprocating piston pumping machine, of non-pulsating flow, comprising a plurality of like pumping modules each having one primary cylinder and one secondary cylinder coaxially joined to each other by interposition of a bushing through which slides a piston rod with a piston attached to each of its ends, wherein each secondary cylinder is provided, at the end opposed to the bushing with suction and delivery valves that connect the individual modules to a suction distributor conduit and to a delivery collector conduit respectively, both of these latter conduits being connected to their respective individual modules via shut-off valves; each primary cylinder has the end opposed to the bushing closed by a valve manifold, all of the individual module's valve manifolds being interconnected through a pressurized hydraulic fluid distributor conduit through which pressurized hydraulic fluid is supplied by at least one hydraulic pump, the pressurized hydraulic fluid being supplied to the primary cylinder of each module for advancing the pistons through a forward stroke; and a hydraulic fluid chamber formed in each primary cylinder by a back side of the piston, said bushing, the rod's surface and the cylinder's interior wall, communicates by means of a distributor-collector conduit with all such chambers of the rest of the modules for returning the pistons through a return stroke, said distributor collector conduit being provided with at least one hydropneumatic accumulator, characterized in that said hydropneumatic accumulator is connected via the distributor-collector conduit to a relatively large, supplementary gas reservoir constituting a volumetric compensator for all the hydraulic fluid contained in all said chambers, and at the same time providing pressure for the return stroke of the pistons at a return stroke speed which is variable independently of the forward stroke speed.

Furthermore, the European patent application n° EP2605597A1 discloses a split-chamber pressure exchanger characterized in that the pressure exchange chambers and the pistons thereof are split in two. Each fluid passes through the corresponding chamber thereof, such that said fluids cannot be mixed. The cross sections of the chambers can be varied in order to vary the transmitted pressure. The reverse line operation can be established and synchronized using a U-shaped tube with telescopic sides and a fixed base filled with fluid or diametrically opposed curved lines, and multiple arrangements can be used. Split-chamber pressure exchangers can be used as surface or well pumping systems and the pumping fluid used can differ from the fluid to be pumped. Different levels of any material can be exploited at any storage site using a chamber with elastic walls filled with fluid and attached to the bottom. Electric power can be generated by centrifuging the pre-pumped fluid.

It is precisely said problem that drove the inventors to research deeper into their studies on energy efficient positive displacement machines and fluid pumps, until they developed the hydraulic pump system that is the object of the present invention, which solves the aforementioned practical case and also has many other applications, such as serving as the mechanical heart of the aforementioned high energy performance hydroelectric mini-power plants, which can now send water through the turbine at high pressure, and in other facilities in which a high volume of water discharge is necessary, such as ultrafiltration or inverse osmosis facilities.

**Description of the invention**

The invention refers to a hydraulic pump system for water and other incompressible fluids according with the claim 1, that does not have external energy requirements in the technical aspect thereof, and that is capable of discharging or redirecting these fluids at high pressures and high volumes for different uses.

In order for the system to operate it only requires a determined available potential energy at an upper level of the compressible fluid to be pumped, which is normally a water reservoir or river current, but it can also be water vapour or a different pressurised gas, which is used to feed two parallel columns of vertical load that end in two respective sets of coaxial cylinders with pistons, an upper load cylinder called actuator cylinder, connected at the base thereof with the homologous cylinder thereof by means of a horizontal pipe, and a suction-impulsion cylinder for pumping the liquid, called work cylinder.

It should be noted that, independently of whether the fluid that provides the potential energy that operates as the engine of the system is a liquid or a gas, the basis of the system is not pumping a liquid in a closed circuit in order to recharge said potential energy at the upper level, instead it operates from a source of potential renewable energy, which does not require maintenance and that is not at all difficult to find, since possible options include using the main stream of a reservoir in hydraulic jumps, the slope of a river, or an elevated artificial tank along a river current: as a result, the great advantage of the pump equipment created is that the maintenance thereof requires zero external energy requirements.

However, as the detailed description of the invention explains below, the system may also be implemented in a cycle or closed circuit facility, recharged by the upper reservoir or tank, when the facility does not have the sole purpose of emptying or draining the lower reservoir but the reservoir is used as a means to create a pressurised water flow that feeds annexed facilities for different uses, so that this discharged water, as well as the water proceeding from discharging the upper reservoir that generates the potential energy of the system, returns to said upper reservoir by means of an impulsion pump that could potentially be powered by a renewable energy source, such as photovoltaic power, wind power, etc., as is the case for the reversible hydroelectric mini-power plant by the same inventor.

There are very few hydraulic pump systems of this type that are actually efficient, and even fewer systems that operate at high pressures and that are scalable at an industrial level. Therefore, there are no known industrial applications in the market that do not use external power sources for operating machinery such as hydroelectric mini-power plants, membrane modules, inverse osmosis desalination facilities, etc.

There are hydraulic pumps systems for incompressible fluids aimed at discharging and/or making use of the energy generated that utilise different power sources, for example, the system of the international patent application WO2011088585A describes a "system for pumping corrosive fluid comprising at least one piston pump and a fluid impulsion cylinder", which uses a pair of coaxial cylinders such as the system described herein, that is based on a plunger pump comprising two cylinders joined by the rod of the pistons thereof, one for hydraulic conduction and the other for impulsion of the corrosive fluid, in which the positive displacement hydraulic pump that is the engine of the assembly is a pump powered by diesel, electric or wind power. However, there are very few known systems of hydraulic pumps that use as the sole power source thereof the potential energy of a fluid elevated at a certain height, such as in the present invention. In the scope of the patents published in Spain, one of these few facilities is the "automatic water booster apparatus actioned by waves", which is the object of the old national patent of the year 1976, number ES483000-A1, comprising a beater in the way of a prismatic cage submerged in water that is anchored to any platform, with a suction-blowing pump inside that comprises a cylinder with a plunger connected to a buoy or floater that slides along the length of the cage of the beater, which operates the water booster pump as it sways due to the sea waves, which in this case are the hydraulic mass providing the potential energy. Evidently this is a system that, although it is powered by potential energy, is completely different, and it does not produce a high-pressure water flow.

More specifically, the aforementioned high pressure hydraulic pump system without external energy requirements that is claimed in the present application is conceived for pumping out any incompressible fluid, which in practice is normally water or aqueous fluid, from a basin, reservoir or tank where it is contained, using the passage of the discharged fluid in order to operate annexed facilities that require large volumes of fluid, which in this case is achieved due to the highly pressurised flow, such as in the passage of fluid through the turbine of a reversible hydroelectric mini-power plant or in filtration modules by means of membranes, or in pumping water volumes for irrigation networks.

As mentioned above, the system uses as the only energy source thereof the potential energy of an incompressible fluid, such as water, or compressible fluids, such as pressurised vapour or gas, contained in a reservoir or tank located in an upper level.

By having access to this potential energy, the system is characterised by a method for applying forces according to which, the fluid of the upper reservoir or tank feeds two parallel columns of vertical load pipes, which end in respective actuator cylinders with an S1 section and that are connected at the bases thereof through a transversal pipe and which comprise on the heads thereof a pipe for discharging this upper fluid, each of them being provided with an inner piston actuated by a swaying longitudinal movement, the rod of which is coaxial with the rod of the inner piston of the respective work cylinders with an S2 section that are located under the other pistons, which comprise tapered bases with two pipes equipped with non-return valves, some suction valves for taking up the incompressible fluid from the lower reservoir and others for using this fluid for other uses, or for discharging the fluid outside, where the section of the actuator cylinders is smaller than the section of the work cylinders, S 1 < S2, and the dimensions of the actuator and work cylinders are such that the corresponding pistons exert the same force on both of them, following the following pressures-sections ratio:

$$P1 \times S1 = P2 \times S2 = \text{Constant value}$$

Starting then from an initial stage in which the volume occupied by the actuator cylinders and connecting pipe is filled with hydraulic liquid, and in which one of the work cylinders is filled with the incompressible liquid to be pumped, by means of the synchronised action of the charge and discharge valves on the heads of the pipes of the actuator cylinders, the force exerted by the weight of the water columns over them causes a cyclical process in which whilst a work cylinder is in a process of impulsion, emptying the fluid as the piston falls, the other is the process of suction, filling up with the fluid as the piston rises, and vice versa.

Considering that the piston exerts the same force on the actuator cylinder and the work cylinder, since they share the same rod, the product of the pressure and suction of both cylinders is constant, as detailed in the equation above.

In this way, varying the relation of the S1/S2 sections of the actuator and work cylinders for the same load volume achieves a proportional increase of the relation of P1/P2 pressures between them, and an increase of the pumping pressure of the system without external energy requirements.

In order for said group of piston cylinders comprising the engine of this new pressurised hydraulic pump system to operate correctly, the system requires two main valves allowing the passage of fluid to the actuator cylinders, which are located in the vertical load pipes, two auxiliary discharge valves on the circuit of the actuator cylinders, which are located between these cylinders and the main loading valves, and four non-return valves, two of which are located in the suction pipes for obtaining the fluid from the lower reservoir by means of the work cylinders, preventing it from returning to the lower reservoir, and the other two are located in the outage or discharge pipes for sending the fluid to the outer network in order to prevent it from returning to the work cylinders.

The system is designed to operate in a closed circuit by means of a circuit in which the fluid discharged from the system is carried out by means of the outage pipe towards equipment for producing energy or for applying it at high pressures, such as the turbines of hydroelectric mini-power plants or membrane modules for filtration, where it will be redirected through a re-circulation pipe towards the lower reservoir, and from there it will be sent back up through a vertical ascent pipe towards the upper reservoir by means of an auxiliary conventional pumping system powered by renewable energy sources. In this way, the circuit of the fluid is closed and produces zero waste.

In this application of the system in a closed circuit as an energy source for different uses, the discharge pipe sends the upper fluid that comes from the heads of the actuator cylinders to the lower reservoir. However, if the system is not carried out in a closed circuit and only as a discharging means without external energy requirements for discharging water or effluent stagnant liquids, then the discharge pipe will send the water to an outer network.

It should be noted that the set of cylinders constituting the mechanical heart of the system can be submerged in the liquid mass to be pumped, without affecting the performance thereof.

**Brief description of the drawings**

To complete the invention described below and in order to give a better understanding of the characteristics of the invention, according to a preferred example of the practical embodiment thereof, this description is accompanied by a set of drawings in which the figures described below have been represented, for purely illustrative purposes and should not be construed as limiting:

Figure 1 shows a schematic of the positive displacement hydraulic machine providing motor force to the system, formed by the two parallel columns of vertical load fed by the upper reservoir, the set of actuator and work piston cylinders on the ends thereof, the pipes for charging and discharging fluids, and the connection between these cylinders, and the control valves.

Figure 2 shows the arrangement of the actuator and work cylinders.

Figure 3 shows a graph detailing the evolution of the relation between the sections at different pressures for the different design variations of said cylinders, which can be developed in the system.

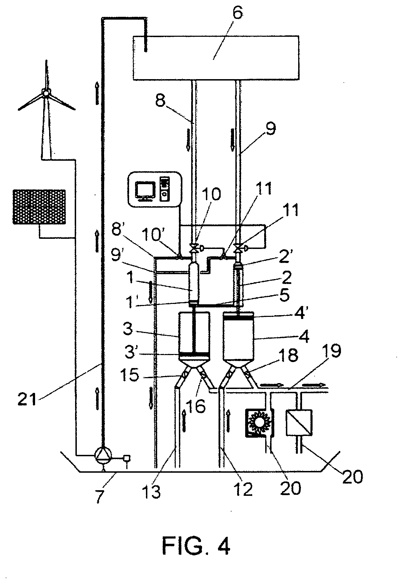

Finally, Figure 4 shows a schematic of an entire facility wherein the system operates in a closed circuit, with annexed facilities powered by the liquid fluid discharged at overpressure through the lower outage pipe, as well as a turbine of a hydroelectric mini-power plant and a membrane module, and an impulsion pump using photovoltaic or wind power for sending the fluid collected in the lower reservoir back up to the upper reservoir, through the vertical ascent pipe.

**Preferred embodiment of the invention**

As detailed in the figures above, the system comprises two actuator cylinders (1) and (2) that feature one piston (1') and (2') respectively, connected to the pistons (3') and (4') that correspond to two work cylinders (3) and (4).

That is, the pistons (1') and (2') of the cylinders (1) and (2) are connected to the pistons (3') and (4'), which are respective of the pistons (3) and (4), with the former being actuator pistons (1) and (2), and the latter being work pistons (3) and (4).

The actuator cylinders (1) and (2) are linked to each other at the lower end thereof by means of a transversal pipe (5).

The system comprises an upper reservoir or tank (6), with an incompressible fluid or a compressible fluid, and also includes a lower reservoir or tank (7), so that the pressure exerted by the fluid contained in the upper tank (6) feeds two parallel vertical load pipes (8) and (9), with their respective valves (10) and (11), which are able to allow or prevent the passage of fluid coming from the upper tank (6) to the actuator cylinders (1) and (2), respectively.

The pipes (8) and (9) fork into discharge pipes (8') and (9'), with their respective valves (10') and (11') for discharging the fluid fed by the aforementioned upper tank (6) towards the actuators cylinders (1) and (2), following the corresponding period of the cycle according to how the system operates, which is described below.

The two work cylinders comprise suction pipes for sending up the fluid (12) from the lower tank (7) to the work cylinder (4), as well as the suction pipe (13) for sending up the fluid from said lower tank (7) to the work cylinder (3), which incorporates a non-return valve (15) that prevents the work cylinder (3) from emptying and allows the fluid of the lower tank (7) to be suctioned, also incorporating a non-return valve (16) preventing the fluid from returning to the work cylinder (3), and another non-return valve (17) preventing the work cylinder (4) from emptying and allowing the fluid of the lower tank (7) to be suctioned, and finally incorporating a non-return valve (18) preventing the fluid from returning to the work cylinder (4).

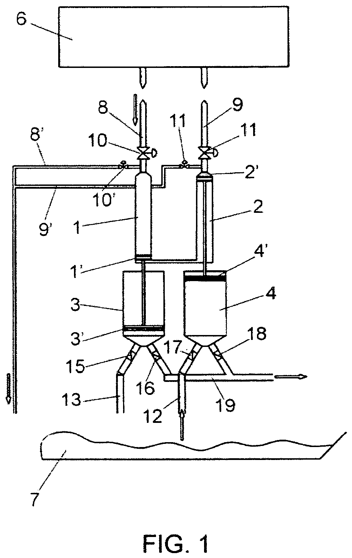

Figure 1 also shows the fluid outage pipe (19) at overpressure for consuming, transmitting and using energy, etc., while figure 4 shows the pipes (20) for using the high pressure fluid used in the high pressure outage or for generating energy by passing through the turbine to the lower tank (7), as well as the return pipe (21) from the lower tank (7) to the upper tank (6).

The system operates as follows:
In order for the system to operate correctly, the volume occupied by the actuator cylinders (1) and (2), plus the connecting pipe (5) between them, must be filled with hydraulic liquid, which is in charge of restarting the movement of the cylinder that has made a discharge.

With this in mind, in order to put the machine into operation, it is necessary to start from an initial state in which one of the work cylinders, for example cylinder (3), is filled with the incompressible fluid to be pumped. This can be achieved by actuating this cylinder by means of the surplus vapour produced by various types of industries. From thereon, the cyclical impulsion-suction process of pumping out fluid from the lower reservoir or tank (7) is carried out according to the following two stages of synchronised operation by means of the control valves managed by a computer:

- opening the main valve (10) keeping the main valve (11) closed and the discharge valve (11') open, with the subsequent discharge of the fluid from the upper reservoir (6) through the pipe (8) in order to fill the actuator cylinder (1) and simultaneously emptying the lower work cylinder (3) through the action of the piston thereof by means of the non-return valve (16) through the outage pipe (19), transferring the load fluid of the actuator cylinder (1) to the actuator cylinder (2) through the transversal connecting pipe (5), and simultaneously filling the lower work cylinder (4) through the pipe (12) and the non-return valve (17) with fluid from the lower reservoir or tank (7) thanks to the depression created in this cylinder due to the ascent of the piston connected to the upper actuator cylinder (2), that discharges the fluid of the upper tank by means of the auxiliary valve (11') through the discharge pipe (8-9') to the lower tank (7);
- closing the main valve (10) and opening the main valve (11) and the auxiliary discharge valve (10'), with the subsequent discharge of the fluid from the upper reservoir or tank (6) through the vertical pipe (9) in order to fill the actuator cylinder (2) and simultaneously emptying the lower work cylinder (4) through the action of the piston thereof by means of the non-return valve (18) through the outage pipe (19), transferring the load fluid of the actuator cylinder (2) to the actuator cylinder (1) through the transversal connecting pipe (5), and simultaneously filling the lower work cylinder (3) through the pipe (13) and the non-return valve (15) with fluid from the lower reservoir or tank (7) thanks to the depression created in this cylinder due to the ascent of the piston connected to the upper actuator cylinder (1), that discharges the fluid of the upper tank by means of the auxiliary valve (10') through the discharge pipe (8-9') to the lower tank (7).

It should be noted that when the piston of the cylinder (3) connected to the cylinder (1) descends due to the fluid being discharged through the pipe (8) from the upper tank (6), the fluid in the connecting pipe (5) allows the pistons of the cylinders connected together (2) and (4) to rise simultaneously, which cause the cylinder (2) to discharge by means of the valve (1 1'), which opens while the valve (10') is closed, sending the fluid through the pipe (8'-9') to the lower reservoir or tank (7). Conversely, as the position of the main and auxiliary valves changes in order to allow the fluid to fall from the upper tank (6) through the pipe (19), both the piston of the cylinder (2) and also of the cylinder (4) connected to it descend, which allows the cylinder (4) to be emptied by means of the non-return valve (18), which sends the fluid for energy consumption, use, etc., through the outage pipe (19). The fluid contained in the pipe (5) causes both the piston of the cylinder (1) and also of the connected cylinder (3) to ascend, which cause the cylinder (1) to be emptied by means of (10'), filling the connected cylinder (3) from the lower container (7) through the depression caused by means of the valve (15) contained in the pipe (13). Afterwards, the entire cycle is repeated again so that while a work cylinder is in the process of suction, the other is in the process of impulsion, and vice versa.

Advantages and applications

The main advantage of this invention is establishing a high pressure hydraulic pump system using only one source of potential renewable energy, such as a river current or an upper reservoir, that, unless it is applied in a closed circuit for different uses, where it will require feeding a re-circulation pump for sending the fluid to the upper level, it does not have external energy requirements.

When it operates in a closed circuit as described above, the system guarantees storing the potential energy at a high efficiency rate, which prevents waste and, if the fluid is water, does not consume water constantly, making use of all the water resources.

In addition to producing energy thanks to the volume of water passing through a turbine by means of the lower impulsion-suction work cylinders, it also generates high hydraulic pressures that can power ultrafiltration systems such as water desalination and other industrial processes that require these high pressures.

Moreover, the design of the system based on mechanisms of connected cylinder-pistons makes it possible to scale it at industrial levels depending on the specific needs, both for high pressures as well as high volumes of fluids.

In the variation of the machine with submerged cylinders, the system is vastly superior to traditional pumps since it is a lot cheaper, safer, it does not require electricity to operate and it can also use any type of valves, so that it can operate with any type of fluids, even those that incorporate solids.

In sum, it is a hydraulic pump system that produces high pressures and is energy efficient, which can be applied to closed circuit reversible hydraulic power plants with the aim of storing energy, irrigation facilities in order to achieve higher volumes of irrigation with significant energy cost reductions, ultrafiltration processes or desalination of sea water, draining water from flooded mines at a low energy cost and eliminating the risk of potential landslides, low cost transportation of lixiviation waters in open pit mines, etc.

Some specific industrial applications of the system include:

- Open circuit reversible hydroelectric power plants.
- Closed circuit reversible hydroelectric mini-power plants for storing potential energy derived from renewable sources.
- Industrial processes of ultrafiltration, filtration, inverse osmosis, industrial dialysis, desalination of sea water, etc., in the chemical, pharmaceutical and food industries, in water and waste filtering, etc.
- High pressure applications in mechanical equipment for extracting solids-liquids (vegetable oils, juices, etc.).
- Low energy consumption water pumps used for irrigation.
- Low energy consumption pumps used for draining flooded mine pits.
- Pumps for lixiviation waters in open pit facilities.
- Applications in urban, populated and remote areas as energy storage equipment and support for distributed energy generation using renewable sources.

Example embodiment

When the inventors observed the potential of the system, they decided to make a pilot equipment in order to demonstrate that it operated correctly, to experiment with material solutions, and finally to analyse the performance thereof.

This test equipment or prototype needed to have dimensions suited to be extrapolated to an industrial facility, as well as a size that could fit into a warehouse where the system could be tested and developed.

The dimensions and characteristics of the components used to build said prototype are described below.

The actuator and work coaxial cylinders are in charge of carrying out the pumping required to optimise the system: while one cylinder pumps the other loads up, thus making the system operate continuously at maximum performance.

Each of these cylinders was given dimensions of 400 mm in diameter and a height of 760 mm, so that the system had a maximum water volume per stroke of 95 litres each. As for the material, the cylinders were manufactured in carbon steel with a turned and polished inner surface in order to prevent fluids from leaking and to operate smoothly and efficiently.

In relation to the pistons of said cylinders, a compromise between the performance and watertight capabilities thereof had to be achieved, so as to avoid leaks of fluids and any kind of potential friction that falsified the performance results of a test equipment.

Very good results were achieved after multiple tests with different materials and solutions, with pistons made of several sheets of circular Teflon joined together by threaded rods made of stainless steel. In order to make the pistons watertight, natural cow leather was placed between the aforementioned sheets, meeting in this way the targets of smooth operational performance and watertight capabilities. The movement of the pistons was carried out by rods connected to the pistons and to anchorings located in different areas.

The different anchorings made it possible to carry out different operational tests by changing the location thereof, and in this way modifying the stroke of the piston, thus showing different system performances.

As for the valves, special valves of transparent methacrylate were made instead of using valves available in the market, in order to be able to properly see how they operate and if there was any air entering the facility at any point. The valves operated completely efficiently for the goal sought.

Additionally, fluid tanks simulated the water reservoirs, both the upper tank used as an engine, as well as the lower tank containing the water or fluid to be pumped. In this case, conventional plastic tanks available in the market were used, with suitable dimensions for holding the volumes of fluid pumped by the system.

Finally, in relation to the pipes, it should be noted that in order for the system to operate correctly it requires the column of fluid to be at a certain height in order to make the weight thereof move the cylinders alternatively, causing them to pump the fluid. In this case, several tests were made using different building materials for the hoses, which also had different diameters, in order to achieve the necessary weight needed at the ends of the cylinders in order to generate the movement thereof.

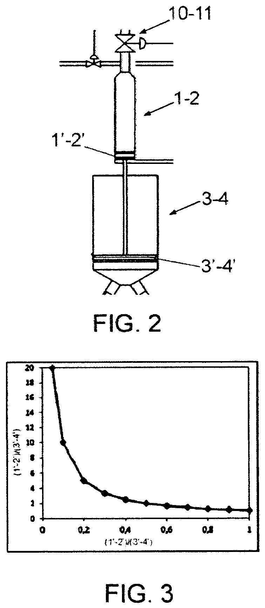

In the graph of figure 3, the ordinate (vertical) axis shows the relationship between the actuator cylinders (1-2) and the work cylinders (3-4), while the abscissa (horizontal) axis shows the relationship between the pistons (1'-2') of the actuator cylinders (1-2) and the pistons (3'-4') of the work cylinders (3-4).

## Claims

1. High pressure hydraulic pump system without external energy requirements, for pumping out an incompressible fluid, such as water, from a reservoir or tank, for uses that require high volumes of fluid, using as sole energy source the potential energy of an incompressible fluid, such as water, or a compressible fluid, such as pressurised gas or vapour, contained in a upper reservoir or tank (6) located at an upper level, and that by making use of the pressure forces exerted by the fluid of the upper reservoir or tank,

    wherein the fluid feeds two parallel columns of a first vertical load pipe (8) and a second vertical load pipe (9) that end respectively in a first actuator cylinder (1) and a second actuator cylinder (2) with an S1 section and P1 pressure, and which are connected at the bases thereof by means of a transversal connecting pipe (5) and which comprise on the heads thereof a first discharge pipe (8') and a second discharge pipe (9') of the upper fluid, each of these actuator cylinders (1,2) being provided with an inner piston actuated by a swaying longitudinal movement, the rod of which is coaxial with the rod of the inner piston of a respective first work cylinder (3) and second work cylinder (4) with an S2 section and P2 pressure, that are located under the actuator cylinders (1,2), and which comprise tapered bases with a first suction pipe (13) and a second suction pipe (12) including non-return valves, ones that are suction pipes (12,13) for taking up the incompressible fluid from a lower reservoir or tank (7) and other outage or discharge pipes (19) for using this fluid for other uses,
    wherein the section of the actuator cylinders (1,2) is smaller than the section of the work cylinders (3,4), S 1<S2, while the dimensions of the actuator cylinders (1,2) and the work cylinders (3,4) are such that the corresponding pistons exert the same force on both of them, according to the following pressures-sections ratio: $P1 \times S1 = P2 \times S2 =$ Constant value, having taken into account that in the initial stage of the system, the volume occupied by the actuator cylinders (1,2) plus the transversal connecting pipe (5) is filled with a hydraulic liquid, while one of the work cylinders (3,4) is filled with the incompressible liquid to be pumped,
    wherein the system further comprises: a first non-return valve (10) and a second non-return valve (11) that allow the fluid to pass through to the actuator cylinders (1,2) which are in the vertical load pipes (8,9) and
    a first auxiliary discharge valve (10') and a second auxiliary discharge valve (11') on the circuit of actuator cylinders (1,2) which are located between the actuator cylinders (1,2) and the first and second non-return valves (10,11), and

a third non-return valve (15), a fourth non-return valve (16) a fifth non-return valve (17) and a sixth non-return valve (18) wherein the third and fifth non-return valves (15,17) are located in the suction pipes (12,13) for obtaining the fluid from the lower tank (7) by means of the work cylinders (3,4) in order to prevent it from returning to said lower tank (7), and the fourth and sixth non-return valves (16,18) are located in the discharge pipes (8',9') for sending the fluid to an outer network, in order to prevent it from returning to the work cylinders (3,4).

2. Procedure for putting into practice the pumping system of claim 1 wherein starting from an initial stage in which one of the work cylinders, such as first work cylinder (3), is filled with the incompressible liquid to be pumped, the cyclical impulsion-suction process of pumping the fluid from the lower reservoir or tank (7) to the outage or discharge pipe is carried out according to the following stages of synchronised operation by means of the control valves:

- opening the first non-return valve (10) keeping the second non-return valve (11) closed and the first auxiliary discharge valve (11') open, with the subsequent discharge of the fluid from the upper tank (6) through the first vertical load pipe (8) in order to fill the first actuator cylinder (1) and simultaneously emptying the lower first work cylinder (3) through the action of the piston thereof by means of the fourth non-return valve (16) through the fluid outage pipe (19), transferring the load fluid of the first actuator cylinder (1) to the second actuator cylinder (2) through the transversal connecting pipe (5), and simultaneously filling the lower second work cylinder (4) through the first suction pipe (12) and the fifth non-return valve (17) with fluid from the lower tank (7) thanks to the depression created in the second work cylinder (4) due to the ascent of the piston connected to the upper second actuator cylinder (2), that discharges the fluid of the upper tank (6) by means of the second auxiliary discharge valve (11') through the discharge pipes (8,9') to the lower reservoir or tank (7);
- closing the first non-return valve (10) and opening the second non-return valve (11) and the first auxiliary discharge valve (10'), with the subsequent discharge of the fluid from the upper tank (6) through the second vertical load pipe (9) in order to fill the second actuator cylinder (2) and simultaneously emptying the lower second work cylinder (4) through the action of the piston thereof by means of the sixth non-return valve (18) through the fluid outage pipe (19), transferring the load fluid of the second actuator cylinder (2) to the first actuator cylinder (1) through the transversal connecting pipe (5), and simultaneously filling the lower first work cylinder (3) through the second suction pipe (13) and the third non-return valve (15) with fluid from the lower tank (7) thanks to the depression created in the first work cylinder (3) due to the ascent of the piston connected to the upper first actuator cylinder (1), that discharges the fluid of the upper tank (6) by means of the first auxiliary discharge valve (10') through the discharge pipes(8-9') to the lower reservoir or tank (7).

**Patentansprüche**

1. Hochdruck-Hydraulikpumpensystem ohne externen Energieaufwand zum Abpumpen eines inkompressiblen Fluids, wie Wasser, aus einem Reservoir oder Behälter, für Verwendungen, die große Fluidvolumina erfordern, unter ausschließlicher Verwendung der potentiellen Energie eines inkompressiblen Fluids, wie Wasser, oder eines kompressiblen Fluids, wie Druckgas oder -dampf, das in einem oberen Reservoir oder Behälter (6) enthalten ist, der sich auf einem oberen Niveau befindet, und zwar unter Verwendung der Druckkräfte, die durch das Fluid des oberen Reservoirs oder Behälters ausgeübt werden, wobei das Fluid zwei parallele Säulen eines ersten Vertikallastrohrs (8) und eines zweiten Vertikallastrohrs (9) zuspeist, die jeweils in einem ersten Aktuator-Zylinder (1) und einem zweiten Aktuator-Zylinder (2) mit einem Querschnitt S1 und einem Druck P1 enden, und die an ihren Böden mittels eines transversalen Verbindungsrohrs (5) verbunden sind und die an ihren Köpfen ein erstes Auslassrohr (8') und ein zweites Auslassrohr (9') für das obere Fluid umfassen, wobei jeder dieser Aktuator-Zylinder (1, 2) mit einem inneren Kolben bereitgestellt wird, der durch eine hin- und hergehende Längsbewegung betätigt wird, dessen Stange koaxial mit der Stange des inneren Kolbens eines jeweiligen ersten Arbeitszylinders (3) und zweiten Arbeitszylinders (4) mit einem Querschnitt S2 und einem Druck P2 ist, die unter den Aktuator-Zylindern (1, 2) angeordnet sind, und die verjüngte Böden mit einem ersten Ansaugrohr (13) und einem zweiten Ansaugrohr (12), die Rückschlagventile einschließen, umfassen, wobei die einen Ansaugrohre (12, 13) zum Aufnehmen des inkompressiblen Fluids aus einem unteren Reservoir oder Tank (7) und andere Abfluss- oder Auslassrohre (19) zum Verwenden dieses Fluids für andere Verwendungen sind, wobei der Querschnitt der Aktuator-Zylinder (1, 2) kleiner ist als der Querschnitt der Arbeitszylinder (3, 4), S1<S2, während die Abmessungen der Aktuator-Zylinder (1, 2) und der Arbeitszylinder (3, 4) so sind, dass die entsprechenden Kolben die gleiche Kraft auf beide von ihnen ausüben, nach dem folgenden Druck-Querschnitts-Verhältnis: P1 $\times$ S1 = P2 x S2 = konstanter Wert, wobei zu berücksichtigen ist, dass in der Anfangsphase des Systems das von den Aktuator-Zylindern (1, 2) und dem transversalen Verbindungsrohr (5) eingenommene Volumen mit einer Hydraulikflüssigkeit gefüllt ist, während einer der Arbeitszylinder (3, 4) mit der zu pumpenden inkompressiblen Flüssigkeit gefüllt ist,wobei das System ferner Folgendes umfasst: ein erstes Rückschlagventil (10) und ein zweites Rückschlagventil (11), die das Fluid zu den Aktuator-Zylindern (1, 2) durchlassen, die sich in den Vertikallastrohren (8, 9) befinden, und ein erstes Hilfsauslassventil (10') und ein zweites Hilfsauslassventil (11') im Kreislauf der Aktuator-Zylinder (1, 2), die sich zwischen den Aktuator-Zylindern (1, 2) und dem ersten und zweiten Rückschlagventil (10, 11) befinden, und ein drittes Rückschlagventil (15), ein viertes Rückschlagventil (16), ein fünftes Rückschlagventil (17) und ein sechstes Rückschlagventil (18), wobei das dritte und das fünfte Rückschlagventil (15, 17) in den Ansaugrohren (12, 13) angeordnet sind, um das Fluid aus dem unteren Tank (7) mittels der Arbeitszylinder (3, 4) zu gewinnen, um seine Rückführung in den unteren Tank (7) zu verhindern, und das vierte und sechste Rückschlagventil (16, 18) in den Auslassrohren (8', 9') angeordnet sind, um das Fluid in ein externes Netzwerk zu leiten, um seine Rückführung zu den Arbeitszylindern (3, 4) zu verhindern.

2. Verfahren zur Verwirklichung des Pumpensystems nach Anspruch 1, wobei ausgehend von einer Anfangsphase, in der einer der Arbeitszylinder, wie der erste Arbeitszylinder (3), mit der zu pumpenden inkompressiblen Flüssigkeit gefüllt wird, der zyklische Impuls-Saugvorgang des Pumpens des Fluids aus dem unteren Reservoir oder Behälter (7) in das Abfluss- oder Auslassrohr nach den folgenden Stufen des synchronisierten Betriebs mittels der Steuerventile durchgeführt wird:

- Öffnen des ersten Rückschlagventils (10), wobei das zweite Rückschlagventil (11) geschlossen und das erste Hilfsablassventil (11') offen gehalten wird, mit dem nachfolgenden Auslassen des Fluids aus dem oberen Behälter (6) durch das erste Vertikallastrohr (8), um den ersten Aktuator-Zylinder (1) zu füllen und gleichzeitig den unteren ersten Arbeitszylinder (3) durch die Wirkung des Kolbens davon mittels des vierten Rückschlagventils (16) durch das Fluid-Ablassrohr (19) zu entleeren, Übertragen des Lastfluids des ersten Aktuator-Zylinders (1) auf den zweiten Aktuator-Zylinder (2) durch das transversale Verbindungsrohr (5), und gleichzeitiges Füllen des unteren zweiten Arbeitszylinders (4) durch das erste Ansaugrohr (12) und das fünfte Rückschlagventil (17) mit Fluid aus dem unteren Tank (7), dank des Unterdrucks, der im zweiten Arbeitszylinder (4) aufgrund des Aufstiegs des mit dem oberen zweiten Aktuator-Zylinder (2) verbundenen Kolbens erzeugt wird, der das Fluid des oberen Tanks (6) mittels des zweiten Hilfsauslassventils (11') durch die Auslassrohre (8, 9') zum unteren Reservoir oder Tank (7) auslässt;
- Schließen des ersten Rückschlagventils (10) und Öffnen des zweiten Rückschlagventils (11) und des ersten Hilfsauslassventils (10'), mit dem nachfolgenden Auslassen des Fluids aus dem oberen Tank (6) durch das zweite Vertikallastrohr (9), um den zweiten Aktuator-Zylinder (2) zu füllen und gleichzeitig den unteren zweiten Arbeitszylinder (4) durch die Wirkung des Kolbens davon mittels des sechsten Rückschlagventils (18) durch das Fluidablassrohr (19) zu entleeren, Übertragen des Lastfluids des zweiten Aktuator-Zylinders (2) auf den ersten Aktuator-Zylinder (1) durch das transversale Verbindungsrohr (5), und gleichzeitiges Füllen des unteren ersten Arbeitszylinders (3) durch das zweite Ansaugrohr (13) und das dritte Rückschlagventil (15) mit Fluid aus dem unteren Behälter (7), dank des Unterdrucks, der im ersten Arbeitszylinder (3) aufgrund des Aufstiegs des mit dem oberen ersten Aktuator-Zylinder (1) verbundenen Kolbens erstellt wird, der das Fluid des oberen Behälters (6) mittels des ersten Hilfsauslassventils (10') durch die Auslassrohre (8-9') in den unteren Behälter oder Tank (7) auslässt.

## Revendications

1. Système de pompe hydraulique à haute pression ne requérant aucune énergie extérieure, pour pomper et extraire un fluide incompressible tel que l'eau, d'un réservoir ou d'une cuve, pour des utilisations exigeant de grands volumes de fluide avec, comme seule source d'énergie, l'énergie potentielle d'un fluide incompressible tel que l'eau, ou d'un fluide compressible, tel qu'un gaz ou une vapeur sous pression, contenu dans un réservoir ou une cuve supérieurs (6) situés à un niveau plus élevé, et ce en utilisant les forces de pression exercées par le fluide du réservoir ou de la cuve supérieurs dans lesquels le fluide alimente deux colonnes parallèles d'un premier tuyau de charge vertical (8) et d'un second tuyau de charge vertical (9) qui aboutissent respectivement dans un premier cylindre actionneur (1) et un second cylindre actionneur (2) de section S1 et de pression PI, et qui sont reliés à leurs bases par un tuyau de liaison transversal (5), et qui comportent à leurs têtes un premier tuyau de décharge (8') et un second tuyau de décharge (9') du fluide supérieur, chacun de ces cylindres actionneurs (1, 2) étant pourvu d'un piston intérieur actionné par un mouvement longitudinal de balancier, dont la tige est coaxiale à la tige du piston intérieur d'un premier cylindre de travail correspondant (3) et d'un second cylindre de travail (4) avec une section S2 et une pression P2, qui sont situés sous les cylindres actionneurs (1, 2), et qui comprennent des bases coniques avec un premier tuyau d'aspiration (13) et un second tuyau d'aspiration (12) comprenant des clapets anti-retour, ceux qui sont des tuyaux d'aspiration (12, 13) pour prélever le fluide incompressible d'un réservoir ou d'une cuve inférieurs (7) et d'autres qui sont des tuyaux de sortie ou de décharge (19) pour utiliser ce fluide à d'autres fins, où la section des cylindres actionneurs (1, 2) est plus petite que la section des cylindres de travail (3, 4), S1<S2, tandis que les dimensions des cylindres actionneurs (1, 2) et des cylindres de travail (3, 4) sont telles que les pistons correspondants exercent la même force sur les deux cylindres, selon le rapport pressions-sections suivant : P1 x S1 = P2 x S2 = Valeur constante en tenant compte du fait que dans la phase initiale du système, le volume occupé par les cylindres actionneurs (1, 2) plus le tuyau de liaison transversal (5) est rempli d'un liquide hydraulique, tandis que l'un des cylindres de travail (3, 4) est rempli avec le liquide incompressible à pomper, où le système comprend en outre : un premier clapet anti-retour (10) et un second clapet anti-retour (11) qui permettent au fluide de passer à travers les cylindres actionneurs (1, 2) qui sont dans les tuyaux de charge verticaux (8, 9) et un premier clapet de décharge auxiliaire (10') et un deuxième clapet de décharge auxiliaire (11') sur le circuit des cylindres actionneurs (1, 2) qui sont situés entre les cylindres actionneurs (1, 2) et le premier et deuxième clapets anti-retour (10, 11), et un troisième clapet anti-retour (15), un quatrième clapet anti-retour (16), un cinquième clapet anti-retour (17) et un sixième clapet anti-retour (18), les troisième et cinquième clapets anti-retour (15, 17) étant situés dans les tuyaux d'aspiration (12, 13) pour obtenir le fluide de la cuve inférieure (7) au moyen des cylindres de travail (3, 4) afin d'empêcher son retour vers ladite cuve inférieure (7), et les quatrième et sixième clapets anti-retour (16, 18) étant situés dans les tuyaux de décharge (8', 9') pour envoyer le fluide vers un réseau extérieur, afin d'empêcher son retour vers les cylindres de travail (3, 4).

2. Procédure de mise en pratique du système de pompage de la revendication 1, dans laquelle, à partir d'une étape initiale où l'un des cylindres de travail, tel que le premier cylindre de travail (3), est rempli du liquide incompressible à pomper, le processus cyclique d'impulsion-aspiration de pompage du fluide depuis le réservoir ou la cuve inférieurs (7) jusqu'au tuyau de sortie ou de décharge est effectué selon les étapes suivantes de fonctionnement synchronisé au moyen des vannes de commande :

- l'ouverture du premier clapet anti-retour (10) en maintenant fermé le deuxième clapet anti-retour (11) et ouvert le premier clapet de décharge auxiliaire (11'), avec la décharge successive du fluide de la cuve supérieure (6) à travers le premier tuyau de charge vertical (8) afin de remplir le premier cylindre actionneur (1) et de vider simultanément le premier cylindre de travail inférieur (3) par l'action de son piston au moyen du quatrième clapet anti-retour (16) à travers le tuyau de sortie du fluide (19), transférant le fluide de charge du premier cylindre actionneur (1) vers le deuxième cylindre actionneur (2) à travers le tuyau de liaison transversale (5), et remplissant simultanément le deuxième cylindre de travail inférieur (4) à travers le premier tuyau d'aspiration (12) et le cinquième clapet anti-retour (17) avec du fluide provenant de la cuve inférieure (7) grâce à la dépression créée dans le deuxième cylindre de travail (4) en raison de la montée du piston relié au deuxième cylindre actionneur supérieur (2), qui décharge le fluide de la cuve supérieure (6) au moyen du deuxième clapet de décharge auxiliaire (11') à travers les tuyaux de décharge (8, 9') vers la cuve ou le réservoir inférieurs (7) ;

- la fermeture du premier clapet anti-retour (10) et l'ouverture du second clapet anti-retour (11) et du premier clapet de décharge auxiliaire (10'), avec la décharge subséquente du fluide de la cuve supérieure (6) à travers le second tuyau de charge vertical (9) afin de remplir le second cylindre actionneur (2) et vider simultanément le second cylindre de travail inférieur (4) par l'action de son piston au moyen du sixième clapet anti-retour (18) à travers le tuyau de sortie du fluide (19), qui transfère le fluide de charge du deuxième cylindre actionneur (2) au premier cylindre actionneur (1) à travers le tuyau de liaison transversale (5), et qui remplit simultanément le premier cylindre de travail inférieur (3) à travers le deuxième tuyau d'aspiration (13) et le troisième clapet anti-retour (15) avec du fluide provenant de la cuve inférieure (7) grâce à la dépression créée dans le premier cylindre de travail (3) par la montée du piston relié au premier cylindre actionneur supérieur (1), qui décharge le fluide de la cuve supérieure (6) au moyen du premier clapet de décharge auxiliaire (10') à travers les tuyaux de décharge (8-9') vers la cuve ou le réservoir inférieurs (7).

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2189629 B1
- ES 2201883 A1
- ES 2334750 B1
- ES 2334750 B8
- WO 2006052107 A2
- US 6051892 A
- US 5634779 A
- EP 2605597 A1
- WO 2011088585 A
- ES 483000 A1

**Non-patent literature cited in the description**

- *Water recharging reversible power plant,* 2001